# EUROPEAN PATENT APPLICATION

(11) **EP 4 703 696 A1**
(43) Date of publication of application: **04.03.2026**
(21) Application number: 24197792.5
(22) Date of filing: 02.09.2024
(51) Int. Cl.: G01J 5/00, G01J 5/0813, G01J 5/0821, G01J 5/08

(54) **THERMAL MONITORING**

(71) Applicant: Koninklijke Philips N.V., 5656 AG Eindhoven (NL)
(72) Inventor: WEISS, Steffen, Eindhoven (NL); VOGTMEIER, Gereon, Eindhoven (NL); LIPS, Oliver, 5656AG Eindhoven (NL)
(74) Representative: Philips Intellectual Property & Standards

(57) **Abstract**

Proposed concepts thus aim to provide schemes, solutions, concept, designs, methods and systems pertaining to a support apparatus for infrared radiation detection. In particular, embodiments aim to provide a support apparatus for infrared radiation detection comprising supports for multiple circuit boards and a thermal camera as well as providing an optical element for redirecting infrared radiation. In this way, the monitoring of thermal (i.e., infrared) radiation from multiple circuit boards can be facilitated even when using only a single thermal camera.

## Description

### FIELD OF THE INVENTION

This invention relates to the field of thermal monitoring, and in particular to the field of thermal monitoring of circuit boards.

### BACKGROUND OF THE INVENTION

The increasing demand of computing power in medical imaging systems, mainly driven by the higher quantity of raw data acquired by modern detectors and complex image reconstruction, is leading to larger imaging host computer systems, often comprising several racks with multiple circuit boards. Such systems can be cooled actively to prevent overheating.

The thermal monitoring/inspection of complex imaging host systems and thus the identification of malfunctioning circuit boards or individual integrated circuits, however, can be a cumbersome task. Some components of the boards may have integrated temperature sensors that can be read out remotely, but these can deliver temperature information only at certain points. Inspection of the temperature of the entire surface area of all boards, e.g., with a thermal camera typically involves opening of covers which takes some time and also changes the thermal environment. For example, components having just been beyond a critical temperature may cool down due to the open covers and thus become unsuspicious during thermal inspection. They may even function properly again at a lower temperature, e.g., during on-site desktop inspection, thus leading to inconclusive results and uncertainty. Furthermore, exchanging circuit boards as part of an error search requires a stock of spare parts and is time-consuming.

The integration of a precision thermal camera for each board, such that monitoring can be more easily performed, is too expensive however and therefore is not a suitable option in practice. Generally, precision thermal cameras (i.e., infrared cameras) require active cooling and are not small enough for integration into computer systems in larger numbers.

### SUMMARY OF THE INVENTION

The invention is defined by the claims.

According to examples in accordance with an aspect of the invention, there is provided a support apparatus for infrared radiation detection.

The support apparatus comprises: a circuit board support for receiving a plurality of circuit boards such that, in use, received circuit boards are supported and are each offset from one another in at least one direction; a thermal camera support for receiving a thermal camera such that, in use, the received thermal camera is supported and configured to detect infrared radiation incident on the thermal camera; and at least one optical element for redirecting infrared radiation; wherein the at least one optical element and the thermal camera support from each of the plurality of circuit boards.

Proposed concepts thus aim to provide schemes, solutions, concepts, designs, methods and systems pertaining to a support apparatus for infrared radiation detection. In particular, embodiments aim to provide a support apparatus comprising supports for multiple circuit boards and a thermal camera as well as providing an optical element for redirecting infrared radiation. In this way, the monitoring of thermal (i.e., infrared) radiation from multiple circuit boards can be facilitated even when using only a single thermal camera.

In other words, it is proposed that by using an optical element capable of redirecting infrared radiation (e.g., a mirror or a light guide), infrared radiation from multiple circuit boards can be monitored using a single thermal camera. In a simple example, using the support apparatus, a single thermal camera can be used to directly monitor one circuit board while infrared radiation emitted from two other circuit boards is redirected towards the same thermal camera (e.g., by reflecting it using a mirror).

For example, by facilitating the thermal monitoring of multiple circuit boards using a single thermal camera, the entirety of a server/computing rack (e.g., used for medical image reconstruction), can be monitored simultaneously and issues with the circuit boards can be more easily detected without, for example, having to use multiple thermal cameras (which is expensive and bulky) or move a single thermal camera around (which might change the thermal environment by having to open a housing of a server/computing rack, as well as taking more time).

This invention may be of particular use in medical imaging systems, such as a computer system used for image reconstruction, however, as would be understood by the skilled person, the invention is also widely applicable.

Ultimately, an improved support apparatus for infrared radiation detection is provided.

In some embodiments, the at least one optical element may comprise a mirror configuration comprising at least one mirror, configured to, in use, reflect infrared radiation emitted from at least one of the plurality of received circuit boards towards the thermal camera. This may provide a structurally efficient, cheap yet effective way of redirecting infrared radiation.

In some embodiments, the orientation and/or position of the at least one mirror may be adjustable. This may allow for a single mirror, for example, to be used to adjustably reflect infrared radiation from two or more circuit boards towards the thermal camera.

In some embodiments, the at least one mirror may comprise at least one of: a planar mirror; and a curved mirror, wherein a curved mirror comprises a mirror with curvature along one or two dimensions. These may both be suitable options for mirrors for reflecting infrared radiation from a circuit board, and a combination of planar and curved mirrors may be particularly beneficial.

In some embodiments, the mirror configuration may comprise at least two mirrors, such that, in use, each mirror is configured to reflect infrared radiation emitted from a different one of the plurality of received circuit boards towards the thermal camera. This may provide a structurally efficient and mechanically simple way to reflect infrared radiation from multiple circuit boards.

In some embodiments, the mirror configuration may be configured to, in use, reflect infrared radiation emitted from all of the plurality of received circuit boards towards the thermal camera. In this way, the position of the thermal camera support may be more flexible, allowing the thermal camera, in use, to be positioned in a wider variety of positions as it does not have to directly view any of the received circuit boards.

In some embodiments, in use, each of the plurality of received circuit boards may be positioned in different planes parallel to one another and offset along a first dimension. This may provide an effective and structurally efficient layout for the received circuit boards.

In some embodiments, the at least one mirror and the thermal camera support may be arranged on a line along the first dimension. This may provide a structurally efficient layout for the at least one mirror and the thermal camera support such that infrared radiation can be easily reflected towards the thermal camera support without making the support apparatus overly large.

In some embodiments, the at least one mirror may comprise at least two mirrors, and wherein at least two of the at least two mirrors are offset from one another along a second dimension approximately perpendicular to the first dimension. This may allow for more complex redirecting of infrared radiation from the circuit boards, therefore facilitating, for example, a more structurally compact apparatus.

In some embodiments, at least two of the at least two mirrors may be offset along a third dimension approximately perpendicular to the first dimension and the second dimension. This may facilitate a more structurally compact apparatus.

In some embodiments, the at least one optical element may comprise at least one optical fiber configured to, in use, transmit infrared radiation emitted from at least one of the received circuit boards to the thermal camera. An optical fiber may be an effective optical element for precisely redirecting infrared radiation.

In some embodiments, the thermal camera support and the at least one optical element may be configured such that, in use, the thermal camera receives infrared radiation from each of the plurality of received circuit boards simultaneously. This may allow all of the circuit boards to be thermally monitored at the same time, such that issues with any one of them can be detected at any time.

According to another aspect of the invention, there is provided a computing apparatus comprising: the support apparatus according to any herein-described embodiment; the plurality of circuit boards; and the thermal camera.

According to another aspect of the invention, there is provided a method for monitoring thermal radiation emitted from a plurality of circuit boards, the method comprising: redirecting, using at least one optical element, infrared radiation emitted from at least one of a plurality of circuit boards towards a thermal camera, wherein the plurality of circuit boards are each offset from one another in at least one direction; and detecting, by the thermal camera, the redirected infrared radiation.

In some embodiments, the method may further comprise comparing the redirected infrared radiation to predetermined baseline infrared radiation data; and identifying at least one deviation based on the comparison.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified block diagram of a support apparatus according to a proposed embodiment;
Fig. 2 is a schematic diagram showing a support apparatus with a mirror according to a proposed embodiment;
Fig. 3 is a schematic diagram showing a support apparatus with multiple curved mirrors according to a proposed embodiment;
Fig. 4 is a schematic diagram showing a support apparatus with multiple curved and planar mirrors according to a proposed embodiment;
Fig. 5 is a schematic diagram showing a support apparatus with aligned mirrors according to a proposed embodiment;
Fig. 6 is a schematic diagram showing a support apparatus for supporting horizontally-aligned circuit boards according to a proposed embodiment;
Fig. 7 is a schematic diagram showing a support apparatus with an optical fiber according to a proposed embodiment;
Fig. 8 is a schematic diagram showing a support apparatus with multiple optical fibers according to a proposed embodiment;
Fig. 9 is a simplified block diagram of a computing apparatus according to a proposed embodiment;
Fig. 10 is a diagram of a method for monitoring thermal radiation emitted from a plurality of circuit boards according to a proposed embodiment; and
Fig. 11 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to support apparatus. According to proposed concepts, a number of possible solutions may be implemented separately or jointly. That is, although these possible solutions may be described below separately, two or more of these possible solutions may be implemented in one combination or another.

Embodiments of the invention aim to provide a support apparatus for infrared radiation detection comprising supports for multiple circuit boards and a thermal camera as well as providing an optical element for redirecting infrared radiation. In this way, the monitoring of thermal (i.e., infrared) radiation from multiple circuit boards can be facilitated even when using only a single thermal camera.

In other words, it is proposed that by using an optical element capable of redirecting infrared radiation (e.g., a mirror or a light guide), infrared radiation from multiple circuit boards can be monitored using a single thermal camera. For example, using the support apparatus, a single thermal camera can be used to directly monitor one circuit board while the infrared radiation from two other circuit boards is redirected towards the same thermal camera (e.g., by reflecting it using a mirror).

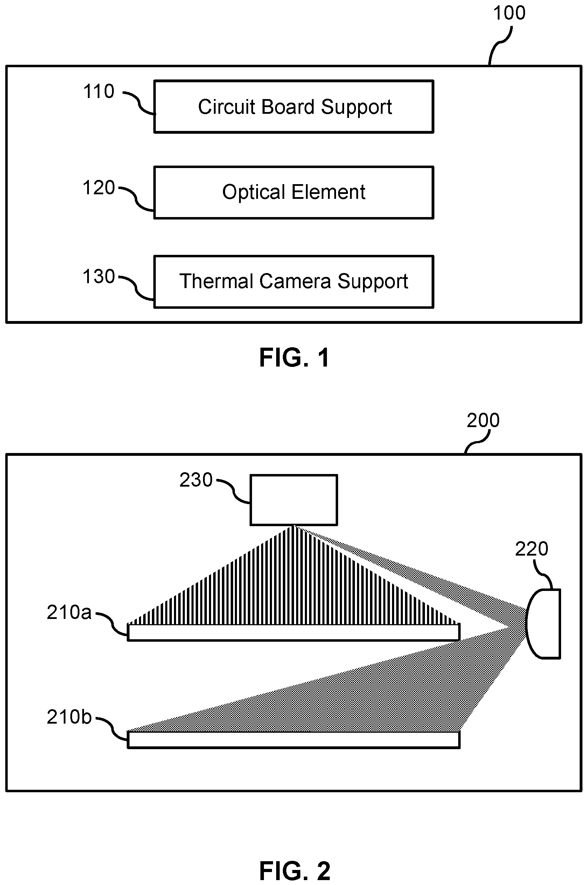

Referring now to Fig. 1, there is depicted a support apparatus 100 for infrared radiation detection according to a proposed embodiment.

The support apparatus 100 comprises a circuit board support 110 for receiving (i.e., suitable for receiving) a plurality of circuit boards such that, in use, received circuit boards are supported and are each offset from one another in at least one direction. As the skilled person would appreciate, the circuit board support 110 could take many forms, for example, at least one of: one or more racks; one or more card cages; one or more backplanes; one or more PCB guides; one or more chassis with mounting points; and one or more shelves. To be clear, the received circuit boards are offset from one another in at least one direction, for example, offset vertically, horizontally, or depth-wise, and in some embodiments they may be offset from one another in at least two directions, or even three.

Purely as an example, the circuit board support 110 could comprise a plurality of vertically arranged racks such that each rack can hold/support one circuit board, thus offsetting the received circuit boards from one another vertically (e.g., they can be aligned horizontally and depth-wise).

The support apparatus 100 also comprises a thermal camera support 130 for receiving a thermal camera such that, in use, the received thermal camera is supported and configured to detect infrared radiation incident on the thermal camera. Again, as the skilled person would appreciate, the thermal camera support 130 could take many forms, for example, at least one of: a mounting point; a rack; a shelf; a tripod; a gimbal; a gripper; and a bracket. It should be noted that the thermal camera being configured to detect infrared radiation incident on the thermal camera should be understood, as would be appreciated by the skilled person, as the thermal camera being configured to detect infrared radiation incident on an image sensor of the thermal camera.

The support apparatus 100 also comprises at least one optical element 120 for redirecting infrared radiation. For instance, this can be understood as the support apparatus 100 comprising one or more optical elements 120 which are capable of reliably changing the course of a substantial portion of incident infrared radiation and not merely absorbing it or randomly scattering it. Suitable optical elements may therefore be, for example, at least one of: a mirror; a lens; a prism; a beam splitter; a grating; and a waveguide (such as an optical fiber). As the skilled person would understand, however, in other embodiments, any other suitable optical element could be used.

The at least one optical element 120 and the thermal camera support 130 are configured (e.g., positioned and orientated) such that, in use, the thermal camera (received by the thermal camera support 130) receives infrared radiation from each (i.e., all) of the plurality of circuit boards (received by the circuit board support 110). This thus facilitates, in use, a single thermal camera being able to monitor all of the circuit boards supported by the circuit board support 110 from a single position.

For example, in this embodiment, the thermal camera support 130 and the at least one optical element 120 are, in fact, configured such that, in use, the thermal camera receives infrared radiation from each of the plurality of received circuit boards simultaneously. This thus allows all of the circuit boards to be thermally monitored at the same time, such that issues with any one of them can be detected at any time. Of course, in other embodiments however, this need not be the case, and the thermal camera could receive infrared radiation from each of the plurality of received circuit boards non-simultaneously, e.g., sequentially or switchable between them (e.g., with one or more adjustable optical elements). In embodiments where the infrared radiation from multiple circuit boards is received simultaneously (and the support apparatus 100 includes the actual thermal camera), the thermal camera's field of view can be configured to be divided into stripes, each receiving infrared radiation from a different one of the circuit boards - in other embodiments, however, the thermal camera's field of view could be configured to be divided/partitioned in any suitable way.

Now referring to Fig. 2, there is depicted a schematic diagram showing a support apparatus 200 with a mirror 220 according to a proposed embodiment. In this embodiment, the support apparatus 200 comprises a circuit board support, 210a and 210b (e.g., a first rack 210a and a second rack 210b), a mirror 220, and a thermal camera support 230.

For example, the first rack 210a is suitable for receiving a first circuit board (not shown) and the second rack 210b is suitable for receiving a second circuit board (not shown). Of course, the thermal camera support 230 is also suitable for receiving and supporting a thermal camera (not shown).

In this embodiment, as can be seen, the at least one optical element comprises a mirror configuration comprising a single mirror 220. This mirror 220 is configured to, in use, reflect infrared radiation emitted from at least one of the plurality of received circuit boards (i.e., the second circuit board received by rack 210b) towards the thermal camera (received by the thermal camera support 230). This provides a structurally efficient, cheap yet effective way of redirecting infrared radiation such that, in use, the thermal camera would be able to monitor infrared radiation from both circuit boards supported by the circuit board support, 210a and 210b.

In this embodiment, the orientation and/or position of the (at least) one mirror 220 is adjustable. In this embodiment, the mirror 220 is, in fact, remotely adjustable (i.e., via wired/wireless communication) but this need not be the case. This can allow an adjustment of the reflected path of infrared radiation, e.g., to optimize the view. In other embodiments, for example, where circuit board support is configured to receive and support three or more circuit boards, the one mirror 220 could also be adjustable to allow for switching between reflecting infrared radiation from the different circuit boards such that a user can control which circuit board they want the thermal camera to be able to detect infrared radiation from. It should be noted that in other embodiments, the (at least) one mirror 220 can be non-adjustable, i.e., fixed.

In this embodiment, the mirror 220 can comprise a planar mirror or a curved mirror, wherein a curved mirror comprises a mirror with curvature along one or two dimensions (convex or concave in at least one dimension). A convex curved mirror has the benefit of a wider field of view, however, it will distort the image more than a planar mirror. A concave curved mirror has the benefit of a magnified view, which can help to provide sufficient resolution even if the folded optical path from the circuit board via optical elements to the thermal camera is long, or if the view angle of the thermal camera to the circuit boards is narrow for reasons of compact design. However, concave mirrors will also distort the image more than a planar mirror.

As can be seen in this embodiment, in use, each of the plurality of received circuit boards (the first circuit board on rack 210a and the second circuit board on rack 210b) are positioned in different (in this case, horizontal) planes parallel to one another and offset along a first dimension (in this case, vertically / along a y-axis). In other words, in use, in this embodiment, the circuit boards are aligned horizontally but offset vertically. Of course, as the skilled person would understand, in other embodiments, the circuit boards could be aligned vertically but offset horizontally, or aligned depth-wise but offset horizontally/vertically, etc.

In some embodiments, the support apparatus 200 can comprise a mirror configuration support configured to receive and support the at least one mirror 220 such that it can effectively be held in the correct position. For example, the mirrors and their support/holders could be part of a modular system configured to match the standardized dimensions of racks and boards, as would be understood by the skilled person.

In an example, an embodiment of the invention can be considered as using an assembly/configuration of one or more mirrors (planar or curved) to facilitate the monitoring of multiple circuit boards (e.g., multiple individual ICs) at once using a single thermal camera. For example, a support apparatus, if taking the form of a closed housing, could include a keyhole opening to which a user could attach a high-precision thermal camera (i.e., in/on a thermal camera support). The support apparatus is configured to allow a defined view of all the circuit boards (e.g., in a rack) via mirrors or directly with the following characteristics: without any change of the thermal environment by having to remove covers; with known and fixed positions of all components (i.e., circuit boards) within the image, thus allowing straightforward comparisons with baseline image data; at normal operation, i.e., under full thermal load/high power, as this minimally invasive approach does not require any shutdown for safety reasons; and with known emissivity of materials and view angles of all targeted surfaces thus enabling precise temperature readings.

In the field of medical computing, this invention may be of particular use in monitoring rack systems used for medical image reconstruction which takes a large amount of compute power, and thus can more often lead to circuit board components overheating. Furthermore, the surface of the bore of a Magnetic Resonance Imaging system will typically show a spatial distribution of temperatures due to active components underneath (e.g., RF-body coil with detuning circuits, powered amplifiers, RF hot spots). A support apparatus according to herein-disclosed embodiments could thus be used to monitor unusual temperature hotspots inside the MRI bore, as would be understood by the skilled person.

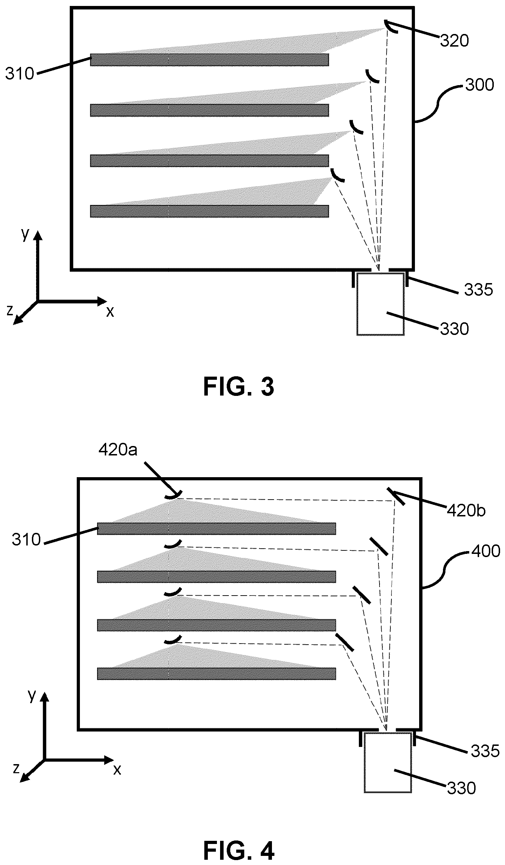

Referring now to Fig. 3, there is depicted a schematic diagram illustrating a support apparatus 300 with multiple curved mirrors according to a proposed embodiment.

In this embodiment, the support apparatus 300 comprises a circuit board support 310 (comprising four racks), a mirror configuration 320 (i.e., the at least one optical element), a thermal camera support 330, and a mechanical alignment means 335. For example, the mechanical alignment means 335 can allow for the position of the thermal camera, in use, to be slightly adjusted. For example, if, in use, the position of the thermal camera is fixed inside the support apparatus (via the thermal camera support 330) then no mechanical alignment would be required as the position of the thermal camera could be set-up when it is first placed. However, if, in use, the thermal camera is only being attached to the thermal camera support 330 temporarily (e.g., by a service technician) then mechanical alignment means 335 can be beneficial for correctly positioning the thermal camera such that it can see all of the received circuit boards correctly (and, for example, facilitate easier comparison with baseline images).

In this embodiment, the mirror configuration 320 comprises four curved mirrors such that, in use, each mirror is configured to reflect infrared radiation emitted from a different one of the plurality of received circuit boards (each received from a different rack of the circuit board support 310) towards the thermal camera (received by the thermal camera support 330). This provides a structurally efficient and mechanically simple way to reflect infrared radiation from multiple circuit boards.

In fact, in this embodiment, the mirror configuration 320 is configured to, in use, reflect infrared radiation emitted from all of the plurality of received circuit boards (received by the circuit board support 310) towards the thermal camera (received by the thermal camera support 330). In this way, the position of the thermal camera support 330 can be more flexible, allowing the thermal camera, in use, to be positioned in a wider variety of positions as it does not have to directly view any of the received circuit boards. For example, in this specific embodiment, in use, the thermal camera does not need to directly see any of the circuit boards and so can be placed in a more easily accessible corner of the support apparatus 300.

As with support apparatus 200 of Fig. 2, in support apparatus 300, the circuit board support 310 is configured such that, in use, each of the plurality of received circuit boards are positioned in different planes parallel to one another and offset along a first dimension (in this embodiment, the y-axis).

Furthermore, in this embodiment, the curved mirrors of the mirror configuration 320 and the thermal camera support 330 are approximately aligned in a second dimension (in this embodiment, the x-axis) approximately (e.g., substantially) perpendicular to the first dimension (as already stated, in this embodiment, the y-axis). As can be seen, the mirrors are not exactly aligned in the second dimension (i.e., do not share exactly the same x-axis coordinate) but are approximately aligned, i.e., within a predetermined distance of one another along the x-axis and/or at least partially overlapping in the second dimension. Generalizing this concept, in some embodiments, the at least one mirror (or at least one of the two or more mirrors) and the thermal camera support are (approximately) aligned in a second dimension perpendicular to the first dimension). In other words, the at least one mirror and the thermal camera support are approximately arranged on a line along the first dimension.

It should be noted that in this embodiment, the thermal camera support 330 comprises an opening for the thermal camera to be positioned in such that the thermal camera can be more easily positioned by a user (e.g., by using mechanical alignment means 335) and is also easily removable for, for example, moving the camera to another support apparatus. For example, the opening could take the form of a keyhole in a rack which could also comprise appropriate mechanical alignment means, as would be understood by the skilled person.

It should be noted that this embodiment can be generalized to the concept of using a single mirror between the thermal camera and each circuit board (wherein each mirror is for reflecting infrared radiation emitted from a different circuit board), and preferably wherein each single mirror is a curved mirror (e.g., convex along one or two dimensions to provide a wide-angle view, or concave along one or two dimensions to provide a magnified view). It should be noted that if the mirrors 320 were concave instead of convex (as shown in Fig. 3) this would have the benefit of providing a magnified view of each circuit board as each mirror would only see its respective circuit board under a narrow angle.

Referring now to Fig. 4, there is depicted a schematic diagram showing a support apparatus 400 with multiple curved and planar mirrors according to a proposed embodiment. In this embodiment, the support apparatus 400 comprises a circuit board support 310, thermal camera support 330 and a mechanical alignment means 335 substantially the same as described in relation to support apparatus 300, as well as a different mirror configuration, 420a and 420b.

In this embodiment, however, the mirror configuration, 420a and 420b, comprises four curved mirrors 420a and four planar mirrors 420b. In use, each of the curved mirrors 420a are for reflecting infrared radiation from a different one of the received circuit boards towards a horizontally-aligned planar mirror 420b which then reflects the infrared radiation towards the thermal camera.

Generalizing this concept, in this embodiment, the mirror configuration comprises at least two mirrors (e.g., one curved and one planar), wherein at least two of the at least two mirrors are offset from one another along the second dimension (in this embodiment, the x-axis). For example, this allows, in use, for infrared radiation emitted from circuit boards to be reflected horizontally out of the racks before being reflected towards the thermal camera, thus facilitating the circuit boards to be positioned closer together. In other words, this can facilitate a more complex redirecting of infrared radiation from the circuit boards, therefore facilitating a more structurally compact apparatus. In other words, this embodiment facilitates the reduction/improving of view angles.

In other words, this support apparatus 400 is configured such that, in use, each of the plurality of received circuit boards are positioned in different horizontal planes to one another; and wherein the mirror configuration comprises: a plurality of curved mirrors 420a, wherein, in use, each curved mirror is above a different received circuit board; and a plurality of planar mirrors 420b, wherein each planar mirror is horizontally aligned with a different curved mirror; wherein, in use, each curved mirror is configured to reflect infrared radiation emitted from the received circuit board which it is above towards its horizontally aligned planar mirror, and each planar mirror is configured to reflect the infrared radiation reflected by its horizontally aligned curved mirror towards the thermal camera.

Having curved mirrors above the received circuit boards more easily allows for infrared radiation emitted from the entirety of the circuit board to be reflected towards a planar mirror for directly reflected said infrared radiation towards the thermal camera.

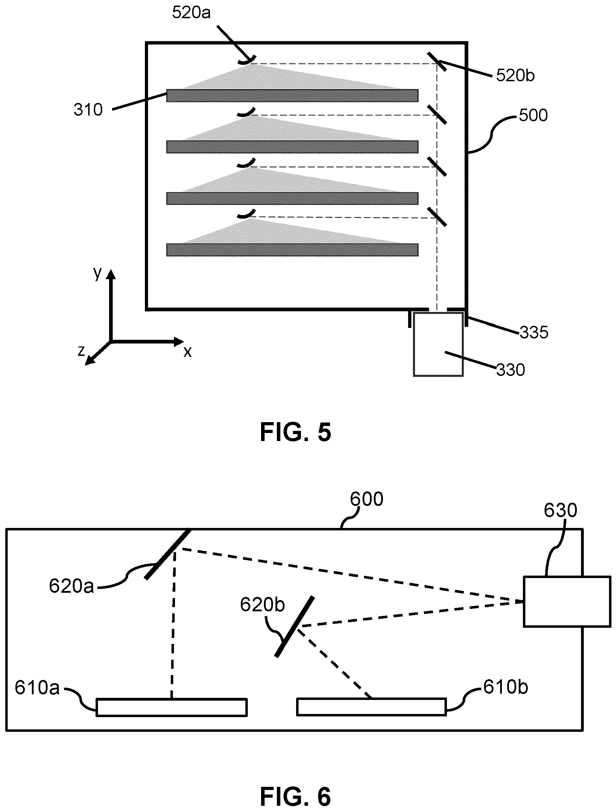

Referring now to Fig. 5, there is depicted a schematic diagram showing a support apparatus 500 with aligned mirrors according to a proposed embodiment. In this embodiment, the support apparatus 500 comprises a circuit board support 310, thermal camera support 330 and a mechanical alignment means 335 substantially the same as described in relation to support apparatus 300, as well as a different mirror configuration, 520a and 520b.

Much like with the mirror configuration, 420a and 420b, of support apparatus 400, mirror configuration, 520a and 520b, comprises four curved mirrors 520a configured substantially the same as the curved mirrors 420a of support apparatus 400, and four planar mirrors 520b. The planar mirrors 520b in this embodiment, however, are exactly aligned with the thermal camera support 330 in the second dimension (in this case, the x-axis). In other words, the planar mirrors 520b and the thermal camera support 330 are exactly arranged on a line along the first dimension (in this case, the y-axis).

In order to avoid the planar mirrors 520b interfering with one another's reflected radiation, they are also offset along a third dimension (approximately, e.g., substantially) perpendicular to the first dimension and the second dimension (in this case, the z-axis / depth-wise). In other words, generalizing this concept, at least two of the at least two mirrors (in this case, four of eight) are offset along a third dimension perpendicular to the first and second dimensions.

Alternatively, in other embodiments, the planar mirrors 520b could be depth-aligned (i.e., aligned along the third dimension), but could comprise one-way mirrors such that infrared radiation reflected from above can pass through the below mirrors.

Referring now to Fig. 6, there is depicted a schematic diagram showing a support apparatus 600 for supporting horizontally-aligned circuit boards according to a proposed embodiment.

In this embodiment, the support apparatus 600 comprises a circuit board support, 610a and 610b, a mirror configuration 620a and 620b, and a thermal camera support 630. The circuit board support comprises two racks, 610a and 610b, which are vertically-aligned but horizontally-offset. The mirror configuration comprises two mirrors, 620a and 620b (each planar or curved) such that, in use, infrared radiation is reflected from each circuit board by a different one of the mirrors towards the thermal camera (received by the thermal camera support 630). In another embodiment, for example, a single mirror could be used to, in use, reflect thermal radiation from both of the circuit boards towards the thermal camera.

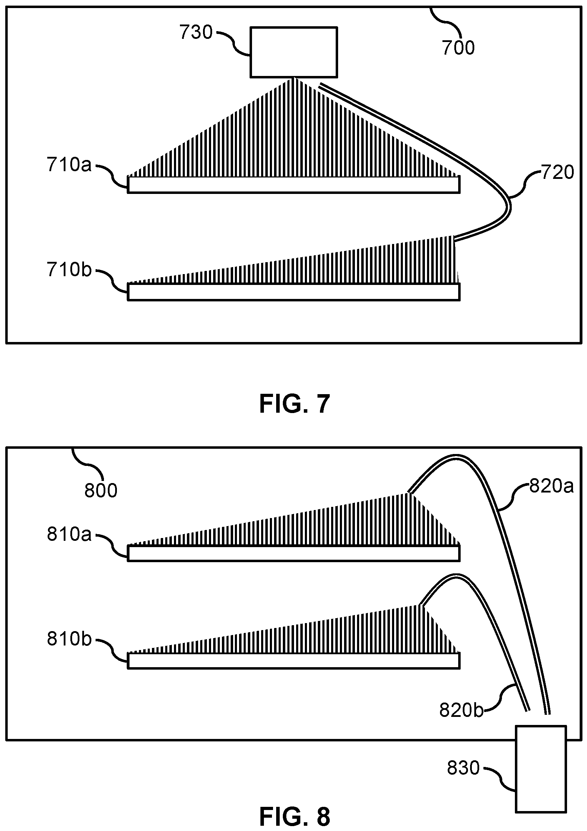

Referring now to Fig. 7, there is depicted a schematic diagram showing a support apparatus 700 with an optical fiber 720 according to a proposed embodiment.

The support apparatus 700 comprises a circuit board support, 710a and 710b, a thermal camera support 730 and an optical fiber 720. In other words, in this embodiment, the at least one optical element comprises at least one optical fiber 720 configured to, in use, transmit infrared radiation emitted from at least one of the received circuit boards (in this case, the circuit board supported by rack 710b) to the thermal camera (received by the thermal camera support 730). In some embodiments, the optical fiber 720 can specifically comprise mid-infrared fibers in order to limit light-loss.

In some embodiments, the support apparatus 700 can comprise an optical fiber support configured to receive and support the at least one optical fiber 720 such that it can effectively be held in the correct position.

In other words, in some embodiments, the at least one optical element can comprise at least one optical fiber which can essentially be used to feed an infrared signal from at least one circuit board to the thermal camera.

It should be noted that in other embodiments, the at least one optical element can comprise a combination of mirrors and optical fibers with both working together to redirect the infrared radiation from the circuit board(s) towards the thermal camera.

Referring now to Fig. 8, there is depicted a schematic diagram illustrating a support apparatus 800 with multiple optical fibers according to a proposed embodiment. The support apparatus comprises a circuit board support, 810a and 810b, a thermal camera support 830, and two optical fibers, 820a and 820b.

In this embodiment, as can be seen, in use, each of the two optical fibers, 820a and 820b, are configured to transmit infrared radiation emitted from a different one of the plurality of received circuit boards towards the thermal camera.

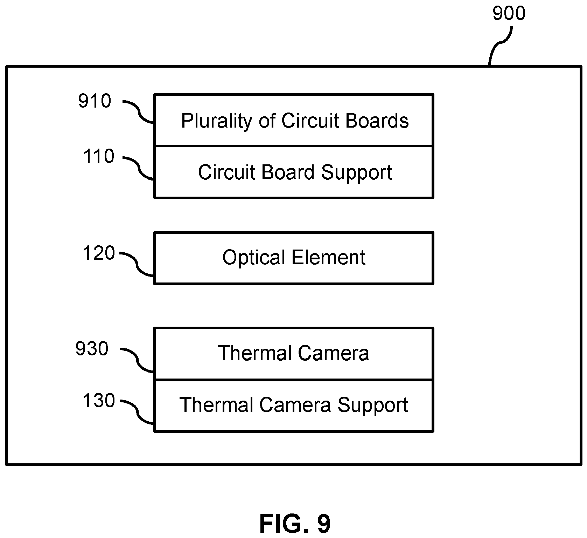

Referring now to Fig. 9, there is depicted a simplified block diagram of a computing apparatus 900 according to a proposed embodiment. The computing apparatus comprises a support apparatus according to any herein-disclosed embodiment (i.e., comprising a circuit board support 110; at least one optical element 120; and a thermal camera support 130); a plurality of circuit boards 910 (i.e., received and supported by the circuit board support 110); and a thermal camera 930 (i.e., received and supported by the thermal camera support 130). For example, in some embodiments, the computing apparatus 900 could comprise a computer system for image reconstruction.

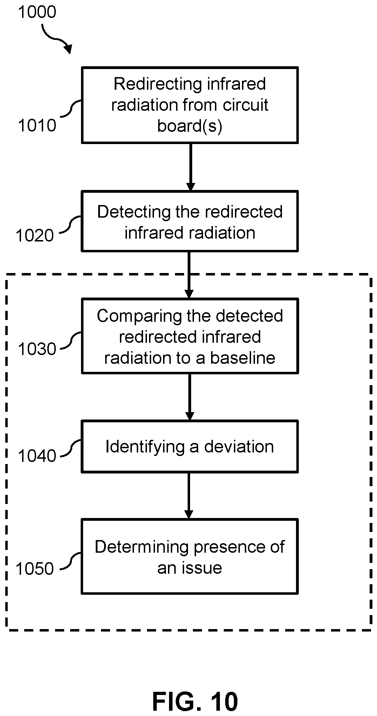

Referring now to Fig. 10, there is depicted a diagram of a method 1000 for monitoring thermal radiation emitted from a plurality of circuit boards according to a proposed embodiment. For example, the method 1000 could be used in conjunction with any support/computing apparatus described above.

The method 1000 comprises step 1010 of redirecting, using at least one optical element, infrared radiation emitted from at least one of a plurality of circuit boards towards a thermal camera, wherein the plurality of circuit boards are each offset from one another in at least one direction. For example, as described above, the redirection could be performed using at least one mirror and/or optical fiber.

Step 1020 comprises detecting, by the thermal camera, the redirected infrared radiation.

Optionally, the method 1000 can further comprise steps 1030 and 1040. Step 1030 comprises comparing the redirected infrared radiation to predetermined baseline infrared radiation data, and step 1040 comprises identifying at least one deviation based on the comparison. In other words, step 1040 comprises identifying a difference between the detected redirected infrared radiation and the predetermined baseline infrared radiation data, wherein the difference exceeds a predetermined threshold (e.g., percentage/absolute difference threshold).

For example, predetermined baseline infrared radiation data can be recorded using fully functional reference systems (i.e., using a comparable plurality of circuit boards to the plurality of circuit boards currently being monitored but without any faults). In some embodiments, predetermined baseline infrared radiation data can also be recorded (and stored for future comparison) for different operating states of the plurality of circuit boards which would result, for example, in different 'normal' operating temperatures of the circuit boards. The detected redirected infrared radiation data can then be compared to one or more predetermined baseline infrared radiation data (i.e., representing one or more different operating states) allowing deviations to be quickly identified.

It should also be noted that in some embodiments, algorithms for comparison of detected data to baseline data can be used to correct for surface materials (emissivity) and view angles. The skilled person would appreciate the myriad ways in which this could be performed.

Further optionally, the method 1000 can comprise step 1050 of determining the presence of an issue with at least one of plurality of circuit boards based on the identified at least one deviation. In other words, step 1050 can comprise actually diagnosing an issue with one of the plurality of circuit boards based on the identified deviation(s).

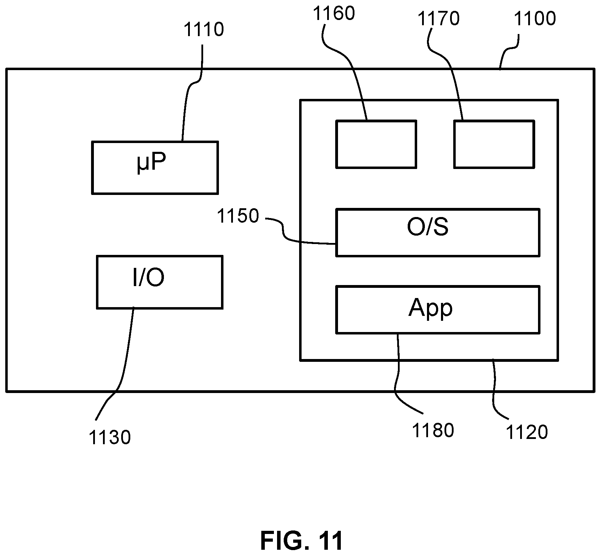

Fig. 11 illustrates an example of a computer 1100 within which one or more parts of an embodiment may be employed. Various operations discussed above may utilize the capabilities of the computer 1100. In this regard, it is to be understood that system functional blocks can run on a single computer or may be distributed over several computers and locations (e.g. connected via internet).

The computer 1100 includes, but is not limited to, PCs, workstations, laptops, PDAs, palm devices, servers, storages, and the like. Generally, in terms of hardware architecture, the computer 1100 may include one or more processors 1110, memory 1120 and one or more I/O devices 1130 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1110 is a hardware device for executing software that can be stored in the memory 1120. The processor 1110 can be virtually any custom made or commercially available processor, a central processing unit (CPU), a digital signal processor (DSP), or an auxiliary processor among several processors associated with the computer 1100, and the processor 1110 may be a semiconductor based microprocessor (in the form of a microchip) or a microprocessor.

The memory 1120 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1120 may incorporate electronic, magnetic, optical, and/or other types of storage media. Note that the memory 1120 can have a distributed architecture, where various components are situated remote from one another, but can be accessed by the processor 1110.

The software in the memory 1120 may include one or more separate programs, each of which comprises an ordered listing of executable instructions for implementing logical functions. The software in the memory 1120 includes a suitable operating system (O/S) 1150, compiler 1160, source code 1170, and one or more applications 1180 in accordance with exemplary embodiments. As illustrated, the application 1180 comprises numerous functional components for implementing the features and operations of the exemplary embodiments. The application 1180 of the computer 1100 may represent various applications, computational units, logic, functional units, processes, operations, virtual entities, and/or modules in accordance with exemplary embodiments, but the application 1180 is not meant to be a limitation.

The operating system 1150 controls the execution of other computer programs, and provides scheduling, input-output control, file and data management, memory management, and communication control and related services. It is contemplated by the inventors that the application 1180 for implementing exemplary embodiments may be applicable on all commercially available operating systems.

Application 1180 may be a source program, executable program (object code), script, or any other entity comprising a set of instructions to be performed. When a source program, then the program is usually translated via a compiler (such as the compiler 1160), assembler, interpreter, or the like, which may or may not be included within the memory 1120, so as to operate properly in connection with the O/S 1150. Furthermore, the application 1180 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 1130 may include input devices such as, for example but not limited to, a mouse, keyboard, scanner, microphone, camera, etc. Furthermore, the I/O devices 1130 may also include output devices, for example but not limited to a printer, display, etc. Finally, the I/O devices 1130 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1130 also include components for communicating over various networks, such as the Internet or intranet.

If the computer 1100 is a PC, workstation, intelligent device or the like, the software in the memory 1120 may further include a basic input output system (BIOS) (omitted for simplicity). The BIOS is a set of essential software routines that initialize and test hardware at start-up, start the O/S 1150, and support the transfer of data among the hardware devices. The BIOS is stored in some type of read-only-memory, such as ROM, PROM, EPROM, EEPROM or the like, so that the BIOS can be executed when the computer 1100 is activated.

When the computer 1100 is in operation, the processor 1110 is configured to execute software stored within the memory 1120, to communicate data to and from the memory 1120, and to generally control operations of the computer 1100 pursuant to the software. The application 1180 and the O/S 1150 are read, in whole or in part, by the processor 1110, perhaps buffered within the processor 1110, and then executed.

When the application 1180 is implemented in software it should be noted that the application 1180 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1180 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method of Fig. 10 may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 11 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A support apparatus (100) for infrared radiation detection comprising:
a circuit board support (110) for receiving a plurality of circuit boards such that, in use, received circuit boards are supported and are each offset from one another in at least one direction;
a thermal camera support (130) for receiving a thermal camera such that, in use, the received thermal camera is supported and configured to detect infrared radiation incident on the thermal camera; and
at least one optical element (120) for redirecting infrared radiation;
wherein the at least one optical element and the thermal camera support are configured such that, in use, the thermal camera receives infrared radiation from each of the plurality of circuit boards.

2. The support apparatus of claim 1, wherein the at least one optical element comprises a mirror configuration comprising at least one mirror (220), configured to, in use, reflect infrared radiation emitted from at least one of the plurality of received circuit boards towards the thermal camera.

3. The support apparatus of claim 2, wherein the orientation and/or position of the at least one mirror (220) is adjustable.

4. The support apparatus of claim 2 or 3, wherein the at least one mirror comprises at least one of: a planar mirror; and a curved mirror, wherein a curved mirror comprises a mirror with curvature along one or two dimensions.

5. The support apparatus of any of claims 2 to 4, wherein the mirror configuration comprises at least two mirrors (320), such that, in use, each mirror is configured to reflect infrared radiation emitted from a different one of the plurality of received circuit boards towards the thermal camera.

6. The support apparatus of any of claims 2 to 5, wherein the mirror configuration is configured to, in use, reflect infrared radiation emitted from all of the plurality of received circuit boards towards the thermal camera.

7. The support apparatus of any of claims 2 to 4, wherein, in use, each of the plurality of received circuit boards are positioned in different planes parallel to one another and offset along a first dimension.

8. The support apparatus of claim 7, wherein the at least one mirror (520b) and the thermal camera support (330) are arranged on a line along the first dimension.

9. The support apparatus of claim 8, wherein the at least one mirror comprises at least two mirrors (520a, 520b), and wherein at least two of the at least two mirrors are offset from one another along a second dimension approximately perpendicular to the first dimension.

10. The support apparatus of claim 9, wherein at least two of the at least two mirrors are additionally offset along a third dimension approximately perpendicular to the first dimension and the second dimension.

11. The support apparatus of claim 1, wherein the at least one optical element comprises at least one optical fiber (720) configured to, in use, transmit infrared radiation emitted from at least one of the received circuit boards to the thermal camera.

12. The support apparatus of any of claims 1 to 11 wherein the thermal camera support (130) and the at least one optical element (120) are configured such that, in use, the thermal camera receives infrared radiation from each of the plurality of received circuit boards simultaneously.

13. A computing apparatus (900) comprising:
the support apparatus (100) of any of claims 1 to 12;
the plurality of circuit boards (910); and
the thermal camera (930).

14. A method (1000) for monitoring thermal radiation emitted from a plurality of circuit boards, the method comprising:
redirecting (1010), using at least one optical element, infrared radiation emitted from at least one of a plurality of circuit boards towards a thermal camera, wherein the plurality of circuit boards are each offset from one another in at least one direction; and
detecting (1020), by the thermal camera, the redirected infrared radiation.

15. The method of claim 14, further comprising:
comparing (1030) the redirected infrared radiation to predetermined baseline infrared radiation data; and
identifying at least one deviation (1040) based on the comparison.
